# EUROPEAN PATENT SPECIFICATION

(11) **EP 3 514 945 B1**
(45) Date of publication and mention of the grant of the patent: **01.03.2023**
(21) Application number: 18382035.6
(22) Date of filing: 23.01.2018
(51) Int. Cl.: H02P 9/12, H02P 29/024

(54) **METHODS OF FAULT DETECTION IN AN ELECTRICAL MACHINE, ELECTRICAL MACHINES AND WIND TURBINES**
VERFAHREN ZUR FEHLERERKENNUNG IN EINER ELEKTRISCHEN MASCHINE, ELEKTRISCHE MASCHINEN UND WINDKRAFTTURBINEN
PROCÉDÉS DE DÉTECTION DE DÉFAUT DANS UNE MACHINE ÉLECTRIQUE, MACHINES ÉLECTRIQUES ET ÉOLIENNES

(43) Date of publication of application: 24.07.2019
(73) Proprietor: GE Renewable Technologies Wind B.V., 4817 PA Breda (NL)
(72) Inventor: URRESTY, JULIO CÉSAR, 08029 BARCELONA (ES)
(74) Representative: de Rooij, Mathieu Julien

(56) References cited:
- US-A1- 2011 316 464
- US-A1- 2014 062 269
- WIEHAN LE ROUX ET AL: "Detecting Rotor Faults in Low Power Permanent Magnet Synchronous Machines", IEEE TRANSACTIONS ON POWER ELECTRONICS, INSTITUTE OF ELECTRICAL AND ELECTRONICS ENGINEERS, USA, vol. 22, no. 1, 1 January 2007 (2007-01-01), pages 322-328, XP011154534, ISSN: 0885-8993, DOI: 10.1109/TPEL.2006.886620
- BRUZZESE CLAUDIO: "2-Pole turbo-generator eccentricity diagnosis by split-phase current signature analysis", 2013 9TH IEEE INTERNATIONAL SYMPOSIUM ON DIAGNOSTICS FOR ELECTRIC MACHINES, POWER ELECTRONICS AND DRIVES (SDEMPED), IEEE, 27 August 2013 (2013-08-27), pages 349-357, XP032514154, DOI: 10.1109/DEMPED.2013.6645739 [retrieved on 2013-10-23]
- SEYYED MEHDI MIRIMANI ET AL: "Static Eccentricity Fault Detection in Single-Stator Single-Rotor Axial-Flux Permanent-Magnet Machines", IEEE TRANSACTIONS ON INDUSTRY APPLICATIONS, IEEE SERVICE CENTER, PISCATAWAY, NJ, US, vol. 48, no. 6, 1 November 2012 (2012-11-01), pages 1838-1845, XP011484789, ISSN: 0093-9994, DOI: 10.1109/TIA.2012.2221673

## Description

The present disclosure relates to methods of fault detection in an electrical machine and further relates to electrical machines. The disclosure also relates to wind turbines.

### BACKGROUND

Electrical machines, such as motors and generators, generally comprise a rotor structure and a stator structure. In case of permanent magnet excited generators (PMG), permanent magnets (PM) are generally arranged on the rotor (although they could also be arranged alternatively in the stator structure), whereas winding elements (e.g. coils) are usually provided on the stator (although they could alternatively be arranged in the rotor structure). In electrical machines, coils may be connected in series, in parallel or a combination of both, some coils connected in series in several parallel branches, see for example US2011/0316464 A1.

Permanent magnet generators are generally deemed to be reliable and require less maintenance than other generator typologies. Permanent magnet generators may be used for example in wind turbines, and also in offshore wind turbines. Wind turbines of this kind generally comprise a rotor with a rotor hub and a plurality of blades. The rotor is set into rotation under the influence of the wind on the blades. The rotation of the rotor shaft drives the rotor of the electrical machine as a generator either directly ("directly driven") or through the use of a gearbox.

In electrical machines, particularly permanent magnet generators which can be used in wind turbines, there are several fault types that may occur. Examples of those faults are eccentricities of the rotor, airgap deformations between rotor and stator, and magnet faults such as demagnetization or broken/detached magnet(s).

Fault diagnosis has an important role in a reliable operation of an electrical machine.

Airgap deformation and eccentricities may cause a higher structural stress and mechanical problems which can be potentially catastrophic faults with increased operational costs.

A detached or broken magnet may cause a loss of electromagnetic force.

Moreover, a detached or broken magnet may cause a loss of parts to the airgap between rotor and stator and thus severe mechanical problems may occur.

In the case of permanent magnet generators, demagnetization may occur because of a stator short-circuit or an improper connection of a coil (among others), if a demagnetized pole is not detected (and not replaced), current in the stator may increase to compensate reduced back-emf (back electromotive force), which can lead to higher losses and higher temperatures. Performance of the generator can thus be reduced.

Eccentricity of the rotor and airgap deformation faults are usually measured by airgap sensors placed on a stator tooth and a rotor pole. However, those sensors require more complex integration in the electrical machine, since they need to be directly placed in the airgap, see for example "2-Pole turbo-generator eccentricity diagnosis by split-phase current signature analysis", C. Bruzzese, 2013 9th IEEE International Symposium on Diagnostics for Electric Machines, Power Electronics and Drives (SDEMPED),XP032514154.

In the existing solutions, magnet faults may be indirectly detected by current or phase voltage monitoring. The increased current to compensate reduced back-emf requires using a complex signal processing to detect a magnet fault.

Furthermore, this current or phase voltage monitoring solution may not detect incipient faults, since stator (or rotor) currents and voltage signals are not directly affected by the magnet fault.

The present disclosure provides examples of methods and devices that at least partially resolve some of the aforementioned disadvantages.

### SUMMARY

The present invention is defined by a method of fault detection according to claim 1 and a wind turbine according to claim 14.

In a first aspect, a method of fault detection in an electrical machine is provided. The electrical machine has a rotor and a stator, one of the rotor and stator having at least two coils connected in series. The method comprises measuring a voltage over a single coil of the two coils connected in series. The method further comprises determining a fault condition based at least on the measured voltage over time.

In this aspect, a method with an enhanced sensitivity to fault detection is obtained with respect to the known solutions since voltage of a single coil is directly affected by the faults, rather than an indirect measurement of total phase current or total phase voltage. The single coil voltage in coils connected in series is less sensitive to circulating currents in the coils which compensate reduced back-emf.

Furthermore, using a single coil voltage measurement instead of indirectly current or phase voltage monitoring requires a simpler signal processing than previous solutions.

The enhanced sensitivity also allows for incipient fault detection (magnet fault, eccentricity, airgap deformation, etc.), which can avoid potential catastrophic faults and thus the operational cost.

Thanks to this aspect, airgap sensors with complex integration in the electrical machine are not needed to determine an airgap deformation fault.

### BRIEF DESCRIPTION OF THE DRAWINGS

Non-limiting examples of the present disclosure will be described in the following, with reference to the appended drawings, in which:
Figure 1 illustrates a perspective view of a wind turbine according to one example;
Figure 2 schematically represents a rotor and a stator of an electrical machine according to one example;
Figure 3 schematically illustrates an eccentricity fault of the rotor of the electrical machine of Figure 2;
Figure 4 schematically illustrates an airgap deformation fault of the electrical machine of Figure 2;
Figure 5 schematically illustrates two parallel branches with two coils connected in series of the electrical machine of Figure 2;
Figure 6 shows a chart of a voltage waveform over a single coil of Figure 5 in a magnet fault case;
Figure 7 shows a chart of a decomposition from the voltage waveform of Figure 6;
Figure 8 shows a voltage waveform over a single coil of Figure 5 in an eccentricity fault case;
Figure 9 schematically illustrates a detail of stator teeth of the electrical machine of Figure 2;
Figure 10 shows a flow diagram representing a method of fault detection in an electrical machine according to one example.

### DETAILED DESCRIPTION OF EXAMPLES

In these figures the same reference signs have been used to designate matching elements. Some parts have not been illustrated for the sake of clarity.

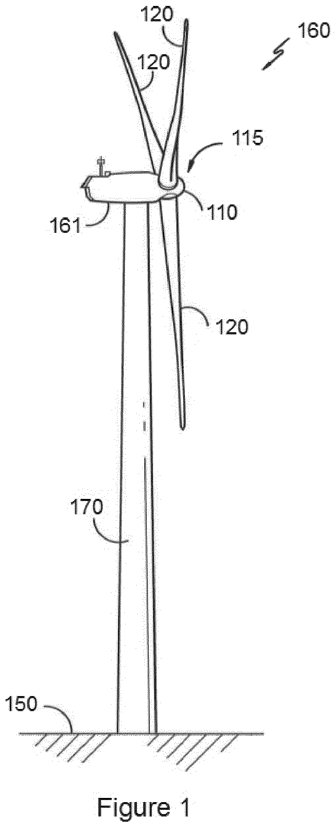

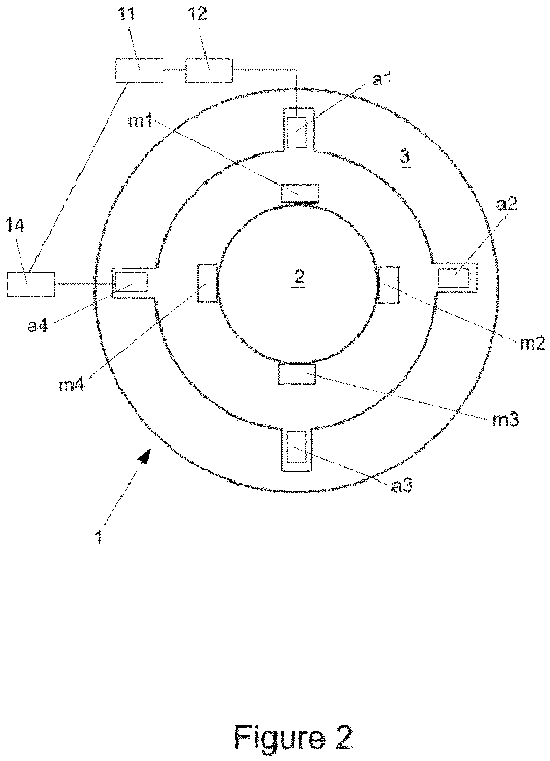

Figure 1 illustrates a perspective view of one example of a wind turbine 160. As shown, the wind turbine 160 includes a tower 170 extending from a support surface 150, a nacelle 161 mounted on the tower 170, and a rotor 115 coupled to the nacelle 161. The rotor 115 includes a rotatable hub 110 and at least one rotor blade 120 coupled to and extending outwardly from the hub 110. For example, in the illustrated embodiment, the rotor 115 includes three rotor blades 120. However, in an alternative embodiment, the rotor 115 may include more or less than three rotor blades 120. Each rotor blade 120 may be spaced about the hub 110 to facilitate rotating the rotor 115 to enable kinetic energy to be transferred from the wind into usable mechanical energy, and subsequently, electrical energy. For instance, the hub 110 may be rotatably coupled to an electric generator. This electric generator is an example of electrical machine 1, as illustrated in Figure 2, positioned within the nacelle 161 to permit electrical energy to be produced.

Figure 2 schematically represents a rotor 2 and a stator 3 of an electrical machine 1 according to one example. This electrical machine 1 may be a direct drive wind turbine generator which may be disposed within the nacelle 161.

The electrical machine 1 comprises the rotor 2 and the stator 3 and the rotor 2 may comprise a plurality of magnets m1, m2, m3, m4. In rotation, the plurality of magnets are arranged to consecutively face coils a1, a2, a3, a4 of the stator 3 when the rotor is driven. In the case of a wind turbine generator, the rotor is set into rotation by rotation of the rotor (which in turn is rotated under the action of the wind) so as to generate electrical energy.

Alternatively, coils may be arranged in the rotor 2 and magnets in the stator 3. In this example, the magnets m1, m2, m3, m4 are permanent magnets. In alternative examples, the electrical machine may be a motor.

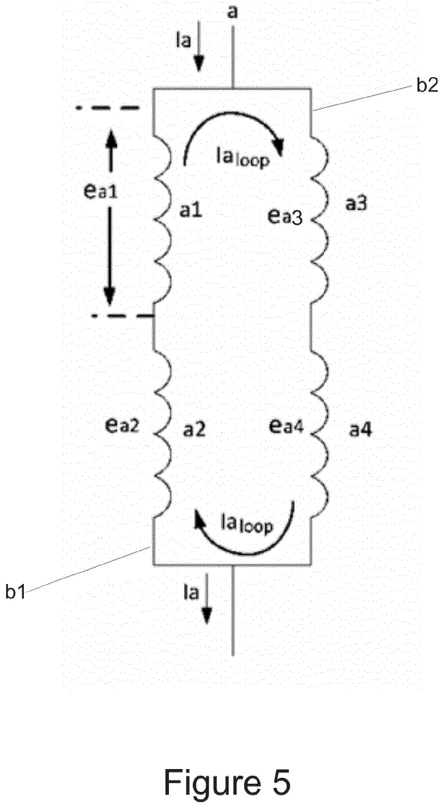

One of the rotor 2 and stator 3 comprises two coils connected in series. This can be seen in Figure 5 which schematically illustrates two parallel branches b1, b2 of a phase with respective two coils of the electrical machine of Figure 2 connected in series. As shown in Figure 5, coils a1 and a2 are connected in series with each other and coils a3 and a4 are connected in series with each other. The two parallel branches b1, b2 of Figure 5 may belong to a phase a of the electrical machine 1. This electrical machine 1 may comprise further phases which have not been illustrated for the sake of clarity. In one particular example, the electrical machine may comprise two further phases, and thus have three phases. In other examples, a different number of phases may be used.

According to one example illustrated in Figure 2, the electrical machine 1 may further comprise a sensor 12, 14 to sense a voltage over a single coil of the two coils connected in series and a controller 11 to measure the voltage through the sensor 12, 14 and determine a fault condition of the electrical machine 1 based at least on the measured voltage ea1, ea2, ea3, ea4 over time. Examples of methods for detecting a fault will be described later on.

In some examples, the sensor 12, 14 may be any suitable sensing device able at least to sense a voltage signal or the like over a single coil of the electrical machine 1, such as e.g. a voltmeter. The number of sensors 12, 14 may vary depending on the case, for instance one or more coils of the electrical machine 1 may have such a sensor 12, 14 associated with them. By way of example, in Figure 2 a first sensor 12 is related to coil a1 and a second sensor 14 is related to coil a4.

In further examples, the controller 11 may be a controlling device able at least to read and receive a voltage signal or the like through a sensing device such as sensor 12, 14.

Controller 11 may comprise a processor and a memory; the memory may store instructions which comprise functionality to execute a method of detecting a fault condition according to any of the examples that are herein disclosed. The processor may execute instructions stored by the memory.

Controller 11 may be associated and thus receive and/or process signals from one or more sensors 12, 14.

In some examples, controller 11 and sensor 12, 14 may be in data communication.

This data communication may be, for instance, wired or wireless. In still further examples, the controller 11 and sensor 12, 14 may be integrally formed.

Although the measured voltage ea1 belongs to coil a1 and voltage ea4 belongs to coil a4 according to Figures 2 and 5, the operation of measuring voltage may be alternatively performed over any of the coils, e.g. ea1, ea2, ea3 or ea4, even a plurality of single coils. A wired or wireless connection of the sensor 12, 14 and the controller 1 to the specific coil a1, a2, a3 or a4 may be adapted accordingly.

In Figure 5, a phase current has been indicated as la and circulating currents in the parallel branches b1, b2 have been indicated as laₗₒₒₚ.

In one example of the electrical machine 1 as per Figure 2, the rotor 2 may comprise a plurality of magnets m1, m2, m3, m4 and the stator 3 may comprise a first pair of coils a1, a2 connected in series and a second pair of coils a3, a4 connected in series, wherein the second pair of coils a3, a4 may be arranged respectively at a different azimuthal position than the first pair of coils a1, a2, and may comprise a first sensor 12 associated with one of the coils a1, a2 of the first pair of coils, and a second sensor 14 associated with one of the coils a3, a4 of the second pair of coils a3, a4. For instance, each coil a1, a2, a3, a4 may be arranged at twelve, three, six and nine o'clock (Figure 2). In other words, the azimuth angle between the first and second pairs of coils may be 180° in this example. In this example also, the azimuth angle between the single coils may be 90°. By measuring voltages at e.g. 90° or 180° angles difference, an overview of the performance of the rotor and/or stator or an overview of the airgap around the perimeter of the electrical machine may be obtained.

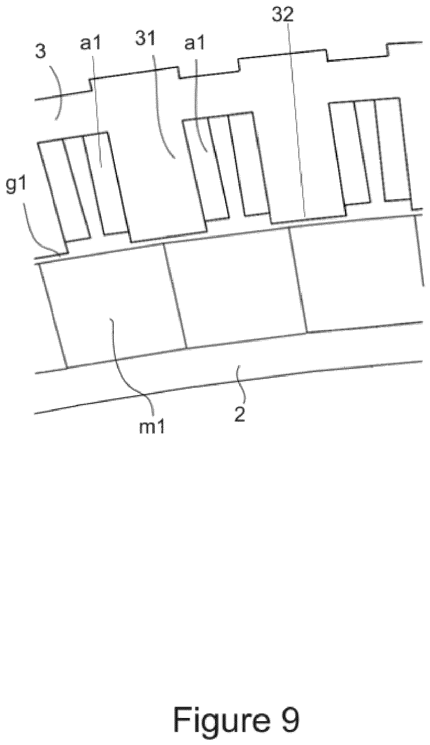

According to some examples of the electrical machine 1, the stator 3 may be ringshaped and comprise a plurality of teeth 31 wherein each tooth 31 is wound with a single coil. Figure 9 schematically illustrates a detail of stator teeth 31 of the electrical machine 1 of Figure 2. The amount of coils may be adapted to particular needs and each of the coils is wound around its corresponding tooth 31 though in Figure 9 only coil a1 is illustrated. Although in this example, the stator is shown to be radially outside the rotor, but alternative arrangements e.g. the rotor radially outside the stator, and the rotor and stator axially facing each other are also possible.

According to an aspect, a wind turbine 160 comprises a tower 170 and a generator, wherein the generator may comprise a controller 11 for controlling the operation of the generator and a sensor 12, 14 for sensing a voltage over a single coil of two or more coils connected in series. The generator is an example of the electrical machine 1. The controller 11 may be configured to measure a voltage over the single coil through the sensor 12, 14 and determine a fault condition based at least on a measured voltage ea1, ea2, ea3, ea4 over time.

Alternatively, the controller 11 may be configured as a separate part from the generator so that the controller 11 may operate remotely. The controller 11 may be wired or wireless connected to the generator.

In some examples, the wind turbine 160 may further comprise a stator 3 having a plurality of coils a1, a2, a3, a4 and at least two of the coils are connected in series, wherein each coil a1, a2, a3, a4 may be wound around a tooth 31 of the stator 3.

In the following, examples of operation of the above described electrical machines 1 will be provided related to examples of methods of fault detection 200.

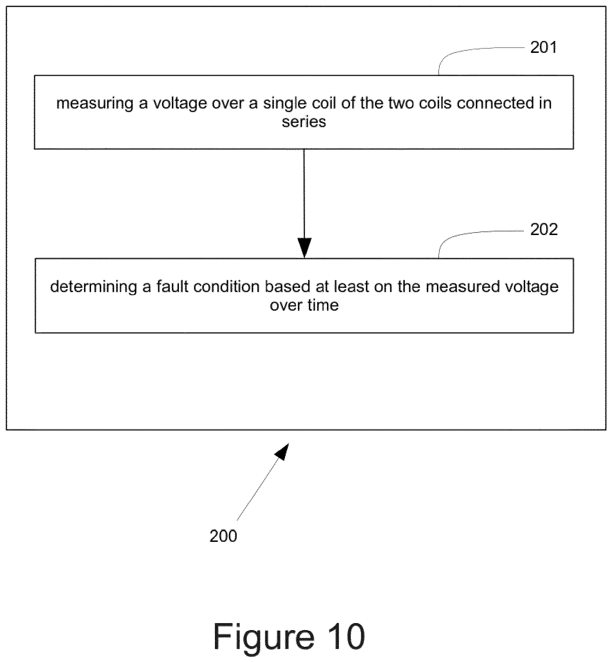

Figure 10 shows a flow diagram representing a method of fault detection 200 in an electrical machine 1 according to one example.

The electrical machine 1 of the method of fault detection 200 may have a rotor 2 and a stator 3, one of the rotor 2 and stator 3 having at least two coils a1, a2, a3, a4 connected in series. The rotor 2, stator 3 and coils a1, a2, a3, a4 have been already described so further details about them will not be provided.

According to an aspect, the method of fault detection 200 according to Figure 10 comprises measuring 201 a voltage ea1, ea2, ea3, ea4 over a single coil of the two coils connected in series and determining 202 a fault condition based at least on the measured voltage ea1, ea2, ea3, ea4 over time. As mentioned above, the single coil may be any of a1, a2, a3 or a4 and any coils of the phases of the electrical machine 1. By this exemplary method of fault detection 200, a fault may be determined because the induced voltage ea1 on the single coil a1 (or any other single coil of the phase) may be directly affected.

According to this aspect, the voltage is sensed by the sensor 12, 14 and measured by the controller 11 through that sensor 12, 14. Controller 11 determines the fault condition based on the voltage over time. The fault condition may describe a negative fault condition or no fault condition, i.e. the electrical machine 1 works properly. Otherwise the fault condition may describe a fault condition of the electrical machine 1. Some examples of fault condition are set forth:
According to one example of the method of fault detection 200, the fault condition may be related to a demagnetization of magnet m1, m2, m3, m4. Demagnetization may be total or at least partial.

According to a further example of the method of fault detection 200, the fault condition may be related to a broken magnet. Alternatively, the fault condition may be related to a detached magnet, for instance from the rotor 2.

Demagnetization and broken or detached magnet may be considered as some examples of magnet failures.

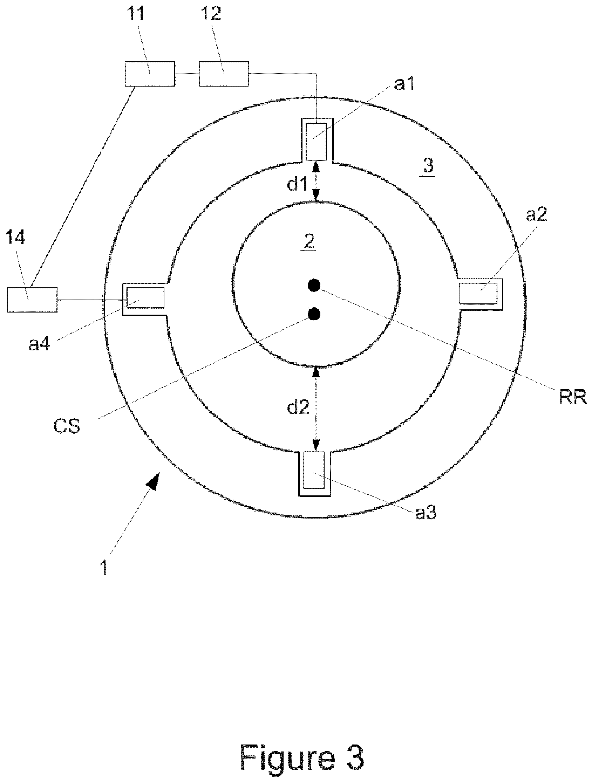

According to another example of the method of fault detection 200, the fault condition may be related to a relative eccentricity between the rotor 2 and the stator 3 of the electrical machine 1. Figure 3 schematically illustrates an eccentricity fault of the rotor 2 of the electrical machine 1 of Figure 2. In operating condition, the rotor 2 may rotate about a rotating axis RR which is substantially concentric with respect to the stator 3.

In Figure 3 different distances d1 and d2 have been referenced between surfaces of the rotor 2 and the stator 3 that face each other. Such difference can be due to incorrect placements of the rotating axis of the rotor RR and the central axis of the stator CS, i.e. rotating axis of the rotor RR and central axis of the stator do not coincide. This way, in Figure 3 d1 is shorter than d2 but d2 may be shorter than d1, particularly when the rotor 2 turns 180° about its rotating axis RR.

An electrical machine 1 without any substantial eccentricity would comprise a stator 3 whose central axis CS would match with the rotating axis RR of the rotor and therefore would have only one distance between facing surfaces of rotor and stator.

The eccentricity of the rotor 2 may be defined with respect any portion of the stator 3, not only the position illustrated in Figure 3.

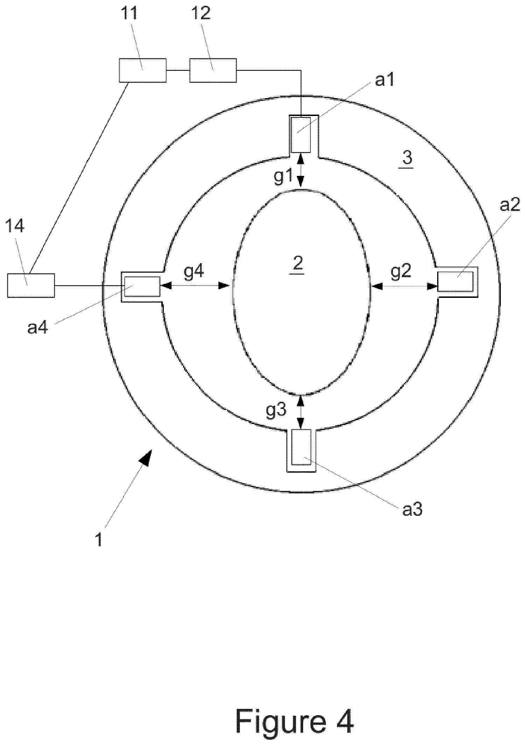

According to still another example of the method of fault detection 200, the fault condition may be related to an airgap deformation. Figure 4 schematically illustrates an airgap deformation fault of the electrical machine 1 of Figure 2.

More particularly, that airgap deformation may be caused by any deformation in at least one part of the rotor 2. That deformation may produce different airgaps g1, g2, g3 and g4 defined between different portions of rotor 2 and stator 3. In Figure 4, g1 and g3 have substantially the same length while g2 and g4 have substantially the same length. This arrangement may vary and all the airgaps may differ from each other. Furthermore, the overall amount of airgaps may also vary.

The method of fault detection 200 according to some examples may comprise measuring the voltage ea1, ea2 over a single coil a1 or a2 of the first pair of coils and the voltage ea3, ea4 over a single coil a3 or a4 of the second pair of coils and mapping an airgap shape between the rotor 2 and the stator 3 based on measured voltages ea1, ea2, ea3, ea4. This example of the method may be implemented when the rotor 2 comprises a plurality of magnets m1, m2, m3, m4 and the stator 3 comprises a first pair of coils a1, a2 connected in series and a second pair of coils a3, a4 connected in series, wherein the second pair of coils a3, a4 may be arranged at a different azimuthal position with respect to the rotor 2 than the first pair of coils a1, a2. These positions may be predefined and may be distributed around the rotor 2 or the stator 3, this way an accurate mapping of the airgap shape may be produced.

In some examples, the method of fault detection 200 is implemented in an electrical machine 1 having at least two pairs of coils connected in series coils, for instance a1, a2 and a3, a4 where the second pair of coils a3, a4 connected in series is arranged at an azimuth angle of substantially 90° or 180° from the first pair of coils a1, a2. This feature can be seen for instance in Figure 2 and Figure 5. With such arrangement, the mapping of the airgap shape may be defined at twelve, three, six and nine o'clock positions (i.e. azimuth angles of 0°, 90°, 180, and 270°).

In one example when the electrical machine 1 comprises a plurality of magnets m1, m2, m3, m4, the method of fault detection 200 may further comprise computing a local airgap value based on the measured voltage over time and based on at least one of a rotor speed and a magnet temperature.

In some other examples when the electrical machine 1 comprises a plurality of magnets m1, m2, m3, m4, the method of fault detection 200 may further comprise computing a local airgap value based on the measured voltage over time and a rotor speed. The local airgap value may be computed based also on a magnet temperature.

The airgap value may be computed by the controller 11.

The measurement of voltage may vary if it is carried out at a predefined (nominal) magnet temperature or at a different magnet temperature, e.g. lower than the predefined one, because magnetic flux of a magnet may vary depending on the magnet temperature.

An induced voltage in a coil is a derivative of a magnetic flux and magnetic flux may vary depending on, *inter alia,* the speed of the rotor.

Therefore, by taking into account the measured voltage over time and at least one of the magnet temperature and the rotor speed an accurate calculation of an airgap value may be achieved. By taking into account the measured voltage, the magnet temperature and the rotor speed the calculation of an airgap value may be even more accurate.

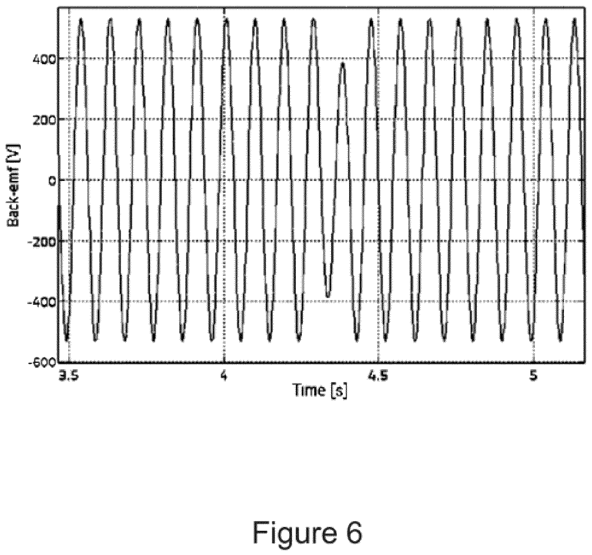

The measured voltage ea1 may comprise a waveform as illustrated in Figure 6. Figure 6 shows a chart of a voltage waveform over a single coil a1 of Figure 5 in a magnet fault case. In Figure 6 the back-emf (back electromotive force) is represented as a function over time.

In order to determine the fault condition of the electrical machine 1, some alternative approaches may be implemented in the controller.

According to one approach, the method may further comprise, in some examples, performing a data processing on the waveform of the measured voltage over time. The data processing may be performed by the controller 11 based on the voltage data of the single coil measured through the sensor 12.

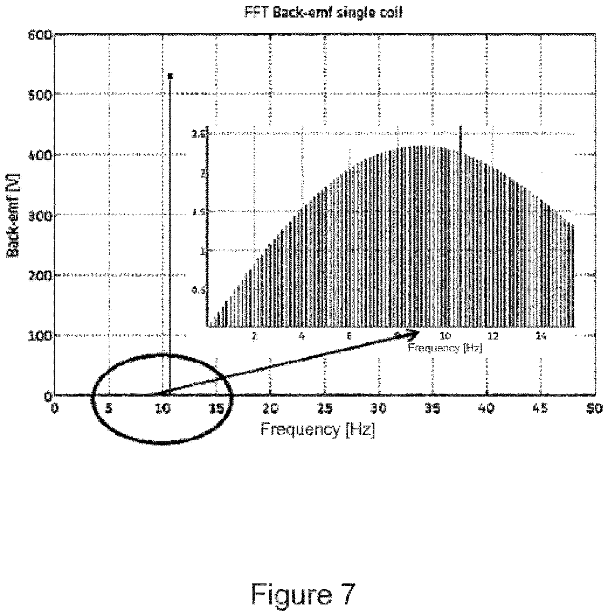

The data processing may be exemplary based on a Fourier Transformation, for instance a Fast Fourier Transformation. That way a representation in the frequency domain may be produced. Figure 7 shows a chart of a decomposition from the voltage waveform of Figure 6.

Alternatively, other algorithms may be implemented to discompose the waveform so as to convert the measured voltage ea1 (signal) from its original time domain to a representation in the frequency domain. The representation in the frequency domain obtained by any alternative algorithm may be the same as or similar to the one in Figure 7.

If the controller 11 carries out a data processing it may produce some values as represented in the chart of Figure 7.

In an example, the method of fault detection 200 may further comprise seeking sub-harmonics in a data-processed waveform of the measured voltage ea1. This action may be performed by the controller 11.

In a yet further example, the method of fault detection 200 may further comprise comparing sub-harmonics in the data-processed waveform and sub-harmonics of a reference waveform to determine a type of fault. The comparison may be performed by the controller 11.

Some exemplary sub-harmonics of a reference waveform associated with exemplary faults may be stored in the memory of the controller 11. The controller may compare sub-harmonics in the data-processed waveform with such exemplary sub-harmonics so as to search any exact or at least partial match. In case of an exact or at least partial match, the controller 11 may determine a type or types of fault which are associated to those sub-harmonics.

According to another approach to determine the fault condition, the method of fault detection 200 may comprise, according to some examples, seeking an amplitude variation in the waveform of the measured voltage with respect to a reference voltage waveform. As above mentioned, the measured voltage may comprise a waveform. This amplitude variation may be sought by the controller 11.

In some examples, the method may further comprise comparing amplitude variations in the waveform of the measured voltage ea1 and in the reference voltage waveform to determine a type of fault. The comparison may be performed by the controller 11. Memory of the controller 11 may store some reference voltage waveforms which are associated with specific fault types.

The amplitude variation may be an amplitude reduction or an amplitude undulation, for example.

Figure 6 is an example of an amplitude reduction. Such amplitude reduction may be detected by comparing at least one of each maximum and minimum of the measured voltage ea1 with at least one of the rest of maxima and minima of the voltage ea1. The controller 11 may search on data of the measured voltage looking for an amplitude reduction. When such reduction is found then the controller 11 may determine that the electrical machine does not work properly. In chart of Figure 6 an amplitude reduction is found approximately between 4 and 4.5 seconds.

By way of example, if controller 11 detects an amplitude reduction as that one of Figure 6 it may determine a magnet fault because the induced voltage ea1 on the single coil a1 (or any other single coil of the phase) is affected in a particular way since the demagnetized magnet is facing coil a1 when reduces amplitude of voltage.

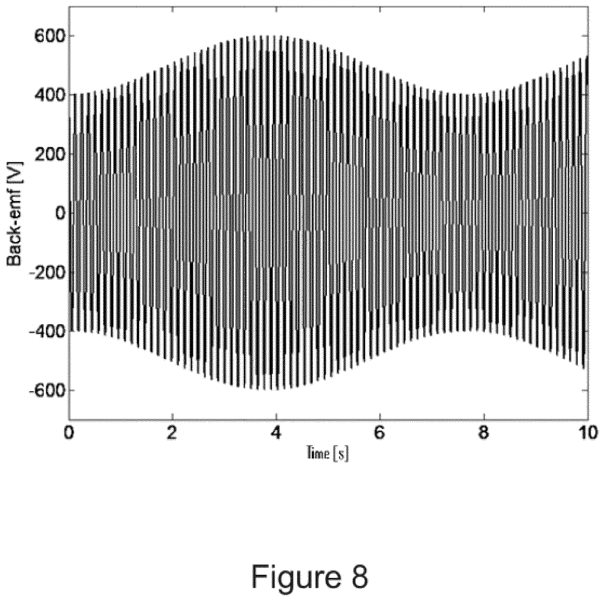

Figure 8 shows a voltage waveform over a single coil of Figure 5 which may occur in the case of an eccentricity. Figure 8 is an example of amplitude undulation, i.e. amplitude of chart line increases and decreases forming peaks and bottoms. If controller 11 detects an amplitude undulation as that one of Figure 8 it may determine an eccentricity fault condition as per Figure 3, because when distance d2 is defined close to coil a3, induced voltage ea1 may be higher in coil a1.

According to an example of the method of fault detection 200, that method may be implemented in an example of electrical machine 1 which is of a three-phase type and comprises two parallel branches per phase, and each branch comprises two coils connected in series. The method may be carried out at each of the phases or at least one of the phases.

In some examples of the method of fault detection 200 the fault may be related to the rotor 2 of the electrical machine 1, i.e. a method of fault detection 200 in a rotor 2 of an electrical machine 1. For instance, the method may be also related to a magnet fault of the rotor 2, eccentricity of the rotor 2 with respect to the stator 3 or an airgap deformation as illustrated in Figure 4.

When a fault condition related to a magnet failure such as a demagnetization of a magnet m1, m2, m3, m4 is determined following the method of fault detection 200, a degree of magnet failure (or specifically a degree of demagnetization) may be computed by the controller 11 and on the basis of the degree of magnet failure an output of the electrical machine 1 (e.g. generator) may be limited until the faulty magnet/s is repaired or replaced.

When a fault condition related to a relative eccentricity between the rotor 2 and the stator 3 of the electrical machine 1 or related to an airgap deformation is determined following the method of fault detection 200, a fatigue value in at least one faulty part of the electrical machine 1 may be calculated. If the fatigue value exceeds a reference fatigue value, an expected design lifetime of the faulty part may be reduced.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art.

Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A method of fault detection (200) in an electrical machine (1) having a rotor (2) and a stator (3), wherein the stator is radially outside or inside the rotor,
wherein the rotor (2) comprises a plurality of magnets (m1, m2, m3, m4) and the stator (3) comprises a phase with a first branch and a second branch arranged in parallel with the first branch, including a first pair of coils (a1, a2) connected in series in the first branch, and a second pair of coils (a3, a4) connected in series in the second branch, the method comprising:
measuring (201) a voltage over a single coil of one of the pairs of coils connected in series;
determining (202) a fault condition based at least on the measured voltage (ea1, ea2, ea3, ea4) over time.

2. The method (200) according to claim 1, wherein the fault condition is related to a demagnetization of a magnet (m1, m2, m3, m4).

3. The method (200) according to any of claims 1 - 2, wherein the fault condition is related to a broken magnet (m1, m2, m3, m4).

4. The method (200) according to any of claims 1 - 3, wherein the fault condition is related to a relative eccentricity between the rotor (2) and the stator (3) of the electrical machine (1).

5. The method (200) according to any of claims 1 - 4, wherein the fault condition is related to an airgap deformation.

6. The method (200) according to claim 5, wherein the second pair of coils (a3, a4) is arranged at a different azimuthal position with respect to the rotor (2) than the first pair of coils (a1, a2), the method comprising:
measuring the voltage over a single coil of the first pair of coils (a1, a2) and over a single coil of the second pair of coils (a3, a4);
mapping an airgap shape between the rotor (2) and the stator (3) based on the measured voltages (ea1, ea2, ea3, ea4).

7. The method (200) according to claim 5, , the method further comprises:
computing a local airgap value based on the measured voltage (ea1, ea2, ea3, ea4) over time and based on at least one of a rotor speed and a magnet temperature.

8. The method (200) according to any of claims 1 - 7, wherein the measured voltage (ea1, ea2, ea3, ea4) comprises a waveform and the method further comprises:
performing a data processing on the waveform of the measured voltage (ea1, ea2, ea3, ea4) over time.

9. The method (200) according to claim 8, wherein the method further comprises:
seeking sub-harmonics in a data-processed waveform of the measured voltage (ea1, ea2, ea3, ea4).

10. The method (200) according to claim 9, wherein the method further comprises:
comparing sub-harmonics on the data-processed waveform and reference sub-harmonics to determine a type of fault.

11. The method (200) according to any of claims 1 - 7, wherein the measured voltage comprises a waveform and the method further comprises:
seeking an amplitude variation in a waveform of the measured voltage (ea1, ea2, ea3, ea4) with respect to a reference voltage waveform.

12. The method (200) according to claim 11, wherein the method further comprises:
comparing amplitude variations in the measured voltage (ea1, ea2, ea3, ea4) and amplitude variations in the reference voltage waveform to determine a type of fault.

13. The method (200) according to any of claims 1 - 12, wherein the fault of the electrical machine (1) is related to the rotor (2) of the electrical machine (1).

14. A wind turbine (160) comprising a tower (170) and a generator,
the generator having a rotor (2) and a stator (3), wherein the stator is radially outside or inside the rotor,
wherein the rotor (2) comprises a plurality of magnets (m1, m2, m3, m4) and the stator (3) comprises a phase with a first and a second branch arranged in parallel with the first branch, including a first pair of coils (a1, a2) connected in series in the first branch, and a second pair of coils (a3, a4) connected in series in the second branch,
and wherein the generator further comprises a controller (11) for controlling the operation of the generator and a sensor (12, 14) for sensing a voltage over a single coil of two or more coils (a1, a2, a3, a4) connected in series, wherein the controller (11) is configured to carry out a method of fault detection according to any of claims 1 - 11.

15. The wind turbine (160) according to claim 14, wherein each coil (a1, a2, a3, a4) is wound around a single tooth (31) of the stator (3).

## Patentansprüche

1. Verfahren zur Fehlererkennung (200) in einer elektrischen Maschine (1) mit einem Rotor (2) und einem Stator (3), , wobei sich der Stator radial außerhalb oder innerhalb des Rotors befindet,
wobei der Rotor (2) eine Vielzahl von Magneten (m1, m2, m3, m4) umfasst und der Stator (3) eine Phase mit einem ersten Zweig und einem zweiten Zweig umfasst, die parallel zum ersten Zweig angeordnet sind, einschließlich eines ersten Paares von Spulen (a1, a2), die im ersten Zweig in Reihe geschaltet sind, und eines zweiten Paares von Spulen (a3, a4), die im zweiten Zweig in Reihe geschaltet sind, wobei das Verfahren umfasst:
Messung (201) einer Spannung an einer einzelnen Spule eines der in Reihe geschalteten Spulenpaare;
Bestimmen (202) eines Fehlerzustands zumindest auf der Grundlage der gemessenen Spannung (ea1, ea2, ea3, ea4) über die Zeit.

2. Verfahren (200) nach Anspruch 1, wobei der Fehlerzustand mit einer Entmagnetisierung eines Magneten (m1, m2, m3, m4) zusammenhängt.

3. Verfahren (200) nach einem der Ansprüche 1 bis 2, wobei der Fehlerzustand mit einem defekten Magneten (m1, m2, m3, m4) zusammenhängt.

4. Verfahren (200) nach einem der Ansprüche 1 bis 3, wobei der Fehlerzustand mit einer relativen Exzentrizität zwischen dem Rotor (2) und dem Stator (3) der elektrischen Maschine (1) zusammenhängt.

5. Verfahren (200) nach einem der Ansprüche 1 bis 4, wobei der Fehlerzustand mit einer Luftspaltverformung zusammenhängt.

6. Verfahren (200) nach Anspruch 5, wobei das zweite Spulenpaar (a3, a4) in einer anderen azimutalen Position in Bezug auf den Rotor (2) angeordnet ist als das erste Spulenpaar (a1, a2), wobei das Verfahren umfasst:
Messung der Spannung über einer einzelnen Spule des ersten Spulenpaares (a1, a2) und über einer einzelnen Spule des zweiten Spulenpaares (a3, a4);
Abbildung einer Luftspaltform zwischen dem Rotor (2) und dem Stator (3) auf der Grundlage der gemessenen Spannungen (ea1, ea2, ea3, ea4).

7. Verfahren (200) nach Anspruch 5, wobei das Verfahren ferner umfasst:
Berechnen eines lokalen Luftspaltwertes auf der Grundlage der gemessenen Spannung (ea1, ea2, ea3, ea4) über die Zeit und auf der Grundlage von mindestens einer der folgenden Größen: Rotordrehzahl und Magnettemperatur.

8. Verfahren (200) nach einem der Ansprüche 1 bis 7, wobei die gemessene Spannung (ea1, ea2, ea3, ea4) eine Wellenform umfasst und das Verfahren ferner umfasst:
Durchführung einer Datenverarbeitung an der Wellenform der gemessenen Spannung (ea1, ea2, ea3, ea4) über die Zeit.

9. Verfahren (200) nach Anspruch 8, wobei das Verfahren ferner umfasst:
Suche nach Subharmonischen in einer datenverarbeiteten Wellenform der gemessenen Spannung (ea1, ea2, ea3, ea4).

10. Verfahren (200) nach Anspruch 9, wobei das Verfahren ferner umfasst:
Vergleich von Teilharmonischen auf der datenverarbeiteten Wellenform und Referenzteilharmonischen, um eine Fehlerart zu bestimmen.

11. Verfahren (200) nach einem der Ansprüche 1 bis 7, wobei die gemessene Spannung eine Wellenform umfasst und das Verfahren ferner umfasst:
Suche nach einer Amplitudenabweichung in einer Wellenform der gemessenen Spannung (ea1, ea2, ea3, ea4) in Bezug auf eine Referenzspannungswellenform.

12. Verfahren (200) nach Anspruch 11, wobei das Verfahren ferner umfasst:
Vergleich der Amplitudenschwankungen der gemessenen Spannung (ea1, ea2, ea3, ea4) mit den Amplitudenschwankungen der Referenzspannungswellenform, um eine Fehlerart zu bestimmen.

13. Verfahren (200) nach einem der Ansprüche 1 bis 12, wobei der Fehler der elektrischen Maschine (1) mit dem Rotor (2) der elektrischen Maschine (1) zusammenhängt.

14. Eine Windkraftanlage (160) mit einem Turm (170) und einem Generator,
der Generator hat einen Rotor (2) und einen Stator (3), wobei der Stator radial außerhalb oder innerhalb des Rotors liegt,
wobei der Rotor (2) eine Vielzahl von Magneten (m1, m2, m3, m4) umfasst und der Stator (3) eine Phase mit einem ersten und einem zweiten Zweig umfasst, die parallel zu dem ersten Zweig angeordnet sind, einschließlich eines ersten Paares von Spulen (a1, a2), die im ersten Zweig in Reihe geschaltet sind, und eines zweiten Paares von Spulen (a3, a4), die im zweiten Zweig in Reihe geschaltet sind,
und wobei der Generator ferner ein Steuergerät (11) zum Steuern des Betriebs des Generators und einen Sensor (12, 14) zum Erfassen einer Spannung über einer einzelnen Spule von zwei oder mehr in Reihe geschalteten Spulen (a1, a2, a3, a4) umfasst, wobei das Steuergerät (11) so konfiguriert ist, dass es ein Verfahren zur Fehlererkennung nach einem der Ansprüche 1 bis 11 ausführt.

15. Windkraftanlage (160) nach Anspruch 14, wobei jede Spule (a1, a2, a3, a4) um einen einzelnen Zahn (31) des Stators (3) gewickelt ist.

## Revendications

1. Procédé de détection de défaut (200) dans une machine électrique (1) ayant un rotor (2) et un stator (3), dans lequel le stator est radialement à l'extérieur ou à l'intérieur du rotor,
dans lequel le rotor (2) comprend une pluralité d'aimants (m1, m2, m3, m4) et le stator (3) comprend une phase avec une première branche et une seconde branche disposée en parallèle avec la première branche, incluant une première paire de bobines (a1, a2) connectées en série dans la première branche, et une seconde paire de bobines (a3, a4) connectées en série dans la seconde branche, le procédé comprenant :
mesurer (201) une tension sur une seule bobine de l'une des paires de bobines connectées en série ;
déterminer (202) une condition de défaut basée au moins sur la tension mesurée (ea1, ea2, ea3, ea4) dans le temps.

2. Procédé (200) selon la revendication 1, dans lequel la condition de défaut est liée à une démagnétisation d'un aimant (m1, m2, m3, m4).

3. Procédé (200) selon l'une quelconque des revendications 1 - 2, dans lequel la condition de défaut est liée à un aimant cassé (m1 , m2, m3, m4).

4. Procédé (200) selon l'une quelconque des revendications 1 - 3, dans lequel la condition de défaut est liée à une excentricité relative entre le rotor (2) et le stator (3) de la machine électrique (1).

5. Procédé (200) selon l'une quelconque des revendications 1 - 4, dans lequel la condition de défaut est liée à une déformation de l'entrefer.

6. Procédé (200) selon la revendication 5, dans lequel la deuxième paire de bobines (a3, a4) est disposée à une position azimutale par rapport au rotor (2) différente de celle de la première paire de bobines (a1 , a2), le procédé comprenant :
mesurer la tension sur une seule bobine de la première paire de bobines (a1, a2) et sur une seule bobine de la seconde paire de bobines (a3, a4) ;
cartographier une forme d'entrefer entre le rotor (2) et le stator (3) sur la base des tensions mesurées (ea1, ea2, ea3, ea4).

7. Procédé (200) selon la revendication 5, , le procédé comprenant en outre :
calculer une valeur d'entrefer local sur la base de la tension mesurée (ea1, ea2, ea3, ea4) dans le temps et sur la base d'au moins l'une d'une vitesse de rotor et d'une température d'aimant.

8. Procédé (200) selon l'une quelconque des revendications 1 - 7, dans lequel la tension mesurée (ea1, ea2, ea3, ea4) comprend une forme d'onde et le procédé comprend en outre :
effectuer un traitement de données sur la forme d'onde de la tension mesurée (ea1, ea2, ea3, ea4) dans le temps.

9. Procédé (200) selon la revendication 8, dans lequel le procédé comprend en outre :
recherche de sous-harmoniques dans une forme d'onde traitée par les données de la tension mesurée (ea1, ea2, ea3, ea4).

10. Procédé (200) selon la revendication 9, dans lequel le procédé comprend en outre :
comparer les sous-harmoniques sur la forme d'onde traitée par les données et les sous-harmoniques de référence pour déterminer un type de défaut.

11. Procédé (200) selon l'une quelconque des revendications 1 - 7, dans lequel la tension mesurée comprend une forme d'onde et le procédé comprend en outre :
rechercher une variation d'amplitude dans une forme d'onde de la tension mesurée (ea1, ea2, ea3, ea4) par rapport à une forme d'onde de tension de référence.

12. Procédé (200) selon la revendication 11, dans lequel le procédé comprend en outre:
comparer les variations d'amplitude de la tension mesurée (ea1, ea2, ea3, ea4) et les variations d'amplitude de la forme d'onde de la tension de référence pour déterminer un type de défaut.

13. Procédé (200) selon l'une quelconque des revendications 1 - 12, dans lequel le défaut de la machine électrique (1) est lié au rotor (2) de la machine électrique (1).

14. Une éolienne (160) comprenant une tour (170) et un générateur,
le générateur ayant un rotor (2) et un stator (3), dans lequel le stator est radialement à l'extérieur ou à l'intérieur du rotor,
dans lequel le rotor (2) comprend une pluralité d'aimants (m1, m2, m3, m4) et le stator (3) comprend une phase avec une première et une seconde branche disposées en parallèle avec la première branche, comprenant une première paire de bobines (a1, a2) connectées en série dans la première branche, et une seconde paire de bobines (a3, a4) connectées en série dans la seconde branche,
et dans lequel le générateur comprend en outre un contrôleur (11) pour commander le fonctionnement du générateur et un capteur (12, 14) pour détecter une tension sur une seule bobine de deux ou plusieurs bobines (a1, a2, a3, a4) connectées en série, dans lequel le contrôleur (11) est configuré pour exécuter un procédé de détection de défaut selon l'une quelconque des revendications 1 à 11.

15. Eolienne (160) selon la revendication 14, dans laquelle chaque bobine (a1, a2, a3, a4) est enroulée autour d'une seule dent (31) du stator (3).
